# EUROPEAN PATENT SPECIFICATION

(11) **EP 2 035 343 B1**
(45) Date of publication and mention of the grant of the patent: **16.05.2012**
(21) Application number: 06776115.5
(22) Date of filing: 03.07.2006
(51) Int. Cl.: C03C 25/64, C03C 25/60

(54) **PROCESS FOR MANUFACTURING AN OPTICAL FIBER WITH A TIME-STABLE HYDROXYL CONTENT**
VERFAHREN ZUR HERSTELLUNG EINER LICHTLEITFASER MIT ZEITSTABILEM HYDROXYLGRUPPENGEHALT
PROCÉDÉ DE FABRICATION D'UNE FIBRE OPTIQUE A CONTENU D'HYDROXYLE STABLE DANS LE TEMPS

(43) Date of publication of application: 18.03.2009
(73) Proprietor: Prysmian S.p.A., 20126 Milano (IT)
(72) Inventor: TOGNINI, Paolo, 20126 Milano (IT); RUZZIER, Marco, 20126 Milano (IT); PATA, Roberto, 20126 Milano (IT)
(74) Representative: Bottero, Claudio
(86) International application number: PCT/EP2006/006455
(87) International publication number: WO 2008/003335

(56) References cited:
- EP-A- 1 182 176
- US-A1- 2002 102 083
- US-A1- 2002 194 877
- US-A1- 2004 047 576
- US-A1- 2005 123 255
- Sergei A Vasil'ev ET AL: "Enhanced diffusion of molecular hydrogen in germanosilicate fibres loaded with hydrogen at high pressures", Quantum Electronics, vol. 35, no. 3, 31 March 2005 (2005-03-31) , pages 278-284, XP55007894, ISSN: 1063-7818, DOI: 10.1070/QE2005v035n03ABEH002890

## Description

### Background of the invention

The present invention relates to a process for manufacturing an optical fiber with a time-stable hydroxyl content.

In particular the present invention relates to a process for evaluating the SiO· defect saturation in an optical fiber while a deuterium treatment is carried out.

### Related art

As reported, for example, in US 6,704,485, optical telecommunication is usually conducted with infrared light in the wavelength ranges of 0.8-0.9. µm or 1.3-1.6 µm. A problem associated with operating fibers in this transmission window is the fact that absorption bands occur in this wavelength region. These absorption bands are in particular due to the presence of OH groups. It was suggested to use highly pure silica with a low hydroxyl content to produce the optical fiber, however, it has been observed that even fibers of very low hydroxyl silica, when exposed to hydrogen at ambient temperature show an increase in attenuation in the transmission window of 1.3-1.6 µm, and in particular at 1380-1400 nm. This increase of attenuation with time due to the presence of hydrogen is often referred to "hydrogen aging loss". Diffusion of molecular hydrogen leads to irreversible reactions. This type of loss is referred to as permanent.

In particular, silica defects SiO• may react with molecular hydrogen to yield OH groups not present before in the material. Such a mechanism explains the observation of hydroxyl groups in a virtually hydroxyl free silica upon short exposure to hydrogen. Such a process creates new OH groups in the material and has detrimental effects on the attenuation, notably because it gives rise to an increase of the SiOH peak, situated at 1383 nm. The reaction is irreversible.

Hydrogen can get into contact with the optical fiber either by diffusion due to any hydrogen source in the atmosphere surrounding the fiber or from water diffusing in the fiber, mainly in form of humidity.

Several efforts have been devoted to the problem of the stability to hydrogen aging of optical fibers.

For example, US 6,704,485, mentioned above, describes a process for reducing the hydrogen aging loss of an optical fiber comprising the step of contacting the optical fiber with deuterium by exposure to a gas mixture containing deuterium at a temperature compatible with the fiber without exposing the fiber to any further activation, and the step of degassing the fiber in a neutral atmosphere.

US 2005/0123255 discloses a process of manufacturing an optical waveguide including placing a plurality of optical waveguides in a treatment vessel and treating the optical waveguides in the treatment vessel with a chemical substance containing at least one of deuterium, hydrogen, and compound thereof. The treating includes causing molecules of the chemical substance to diffuse into the optical waveguides, causing the molecules of the chemical substance that have diffused into the optical waveguides to react with structural defects that exist in a portion, through which light propagates, of the optical waveguides, and removing, from the optical waveguides, molecules of the chemical substance that do not react with the structural defect. After the treatment, transmission losses at a wavelength of 1550 nm and at a wavelength of 1625 nm, after each of the optical fibers has been left standing respectively for 100 hours and for 200 hours, are measured.

JP 2003-261351 discloses the exposure of optical fibers to an ambient atmosphere containing deuterium in a percentage lower than 4 % vol. and higher than 1 % vol. at a temperature not higher than 30°C for two days or more, and then to an ambient atmosphere containing hydrogen. Preferably, hydrogen is provided at a concentration of 100 % vol., without supplying dilution gas. The SiO• defects are inactivated with deuterium. After the optical fiber is exposed to the ambient atmosphere containing deuterium, it is exposed to the ambient atmosphere containing hydrogen. Therefore, even if the above-mentioned SiO• defects remains slightly, without being inactivated with deuterium, they are inactivated by hydrogen. Therefore, while using an optical fiber, Si-OH does not increase, and the increment with time in transmission loss is prevented.

US 2004/0047576 discloses an optical fiber having a transmission loss of 0.40 dB/km or less in a wavelength range of 1310 to 1625 nm after hydrogen ageing, wherein the transmission loss after hydrogen ageing is measured after exposing the optical fiber: to an atmosphere containing hydrogen of about 1 volume % at room temperature until the transmission loss increases 0.03 dB/km or more at 1240 nm compared with the initial loss before hydrogen ageing, and in open atmosphere for more than 14 days.

The inactivation of the SiO· defects in an optical fiber shall hereinafter referred to as "passivation".

The prior art reports that the effectiveness of the treatment and therefore the complete passivation of the SiO· defects can depend on a number of parameters such as
- the deuterium and/or hydrogen concentration (hereinafter also referred to as "passivating element/s") that should be sufficient to saturate all the above said defects, but not too high to originate undesirable absorption features (as reported, e.g., by US 2005/0123255);
- the temperature and the time of exposure to such passivating element/s that could bring about a damage to the optical fiber (as reported, e.g., by US 6,499, 318);
- the concentration and the distribution of SiO· defects inside the optical fiber.

In view of the above parameters, it is of interest to verify the success of the treatment.

As reported in the preamble of JP2005-134469, the known checking processes are notably time consuming since they are carried out only after the passivation treatment has been completed and therefore they require an additional step.

JP2005-134469 aims to solve this problem by monitoring the absorption losses on a sampling portion of fiber while the deuterium process is carried out. According to this document, said monitoring can be effected by a light source with a wavelength of about 630 nm (the absorption peak of the SiO· defects) and is terminated when the quantity of transmitted light (absorption loss) reaches a set quantity of light.

However, since the 630 nm attenuation is detectable only after the gas molecules have diffused into the core of the optical fiber, the actual desired value would be reached by interrupting the treatment much before the time in which it is detected and thus the deuterium process is carried out for a time longer than that required to have a complete passivation of the fiber.

The long treatment time required to detect the attenuation value may also damage the optical fiber. Moreover, this treatment is performed on short spans of fiber and not on the whole bobbin, with inevitable negative consequences on the actual predictability outcome of the passivation treatment on the whole bobbin.

In any case, most of the known process are affected by the same problem since, they are not performed on each bobbin of the passivated batch, but only on randomly chosen bobbins of the batch, even if they are performed on the whole bobbin

### Summary of the invention

The present invention provides a process for manufacturing an optical fiber with a substantially time-stable hydroxyl content, said process comprising a passivation step and a step of evaluating the defect saturation after passivation, the latter step being reliable, time-saving, simple, economic and applicable on a whole batch.

The Applicant has intuited that molecular hydrogen (H₂) and its absorption peak at 1240 nm could be used as marker for ascertain the success/extent of a passivation step performed with deuterium (D₂).

The Applicant has found that by performing a passivating step using a mixture of deuterium and a predetermined quantity of hydrogen and by subsequently monitoring the presence of a 1240 nm absorption peak in the fiber absorption spectrum it is possible to evaluate the passivation of the SiO· defects during the treatment itself.

None of the above mentioned prior art documents provides an evaluation of the 1240 nm absorption peak for assessing the success of the passivation treatment.

The process of the invention is applicable to the whole fiber and to the whole batch without damaging the optical fibers and without requiring adjustments of the routinely employed tools.

According to a first aspect, the invention relates to a process for manufacturing an optical fiber with a time-stable hydroxyl content, said process comprising the steps of:
- preparing an optical fiber
- measuring the spectral attenuation of the optical fiber;
- exposing the optical fiber to an atmosphere comprising a mixture of deuterium and hydrogen molecules;
- removing the optical fiber from the atmosphere;
- allowing the deuterium and hydrogen molecules to diffuse into the optical fiber;
- measuring the spectral attenuation of the optical fiber;
- analysing the attenuation coefficient at least at 1240 nm.

Preferably, the present invention relates to a process for manufacturing a single-mode optical fiber.

Advantageously, the optical fiber manufactured by the process of the invention has an attenuation peak at 1380 nm equal to or lower than 0.35 dB/km.

Advantageously, said deuterium/hydrogen mixture is provided in an inert atmosphere, preferably a nitrogen atmosphere.

Preferably, the optical fiber is exposed to an atmosphere comprising from 1% vol. to 10% vol. of the mixture deuterium/hydrogen.

Preferably, said atmosphere comprises a quantity of hydrogen of from 0.15% vol. to 8% vol.

In a preferred embodiment, the step of exposing the optical fiber to an atmosphere is carried out at a temperature of from 20°C to 40°C.

In a preferred embodiment, the step of exposing the optical fiber to an atmosphere is carried out for a time t of from 5 hours to 240 hours, more preferably from 10 hours to 48 hours.

The step of the preparing an optical fiber can comprise the sub-steps of drawing an optical fiber from a preform and bobbing it.

The preform can be obtained by an outside vapor deposition (OVD) process, wherein layers of glass particles are deposited on the outside surface of a target rod, or by a vapor-phase axial deposition (VAD) process, wherein starting chemicals are carried from the bottom into oxygen-hydrogen burner flame to produce glass soot which is deposited on the end of a rotating silica rot, thereby a porous preform is grown in the axial direction.

Alternatively, the preform can be obtained by chemical vapour deposition techniques, such as by Modified Chemical Vapor Deposition (MCVD) or Plasma Chemical Vapor Deposition (PCVD).

Advantageously, the step of measuring the spectral attuenuation of the fiber before exposure to the passivating atmosphere comprises the step of evaluating the intensity of the absorption peak at 630 nm, i.e. the absorption peak of the SiO· defects. Other absorption peaks advantageously measured are that at 1380 nm and that at 1240 nm.

Advantageously, the step of analysing the attenuation of the passivated fiber is also performed at 1310 nm and/or at 1380 nm and/or at 1550 nm.

Preferably the step of measuring the spectral attenuation of the fiber is carried out from 20 hours to 72 hours from the beginning of the removing step.

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

In the present description and claims, as "single-mode optical fiber" it is meant an optical fiber through which only one mode will propagate.

In the present description, as "batch" it is meant a number of bobbins of optical fiber produced by drawing the fiber under substantially the same production conditions.

In the present description and claims as "attenuation coefficient" it is meant the attenuation - i.e. the reduction in optical power as it passes along a fiber - of an optical fiber per unit length, in dB/km, and indicated as α.

### Brief description of the figures

Further characteristics and advantages of the invention will be more apparent from the following description of some preferred embodiments of the optical fiber manufacturing process according to the invention, provided as non-limiting examples, with reference to the appended drawings, wherein:
- Figure 1 shows a schematic diagram of the attenuation coefficient change Δα (dB/Km) at 630 nm as a function of time T (hours) during the exposure of the optical fiber to an hydrogen-containing atmosphere;
- Figure 2 shows two schematic diagrams of the attenuation change (dB/Km) respectively at 1240 nm and at 1380 nm as functions of time (T) during the exposure of the optical fiber to an hydrogen-containing atmosphere;
- Figure 3 shows a schematic diagram of the difference between the attenuations after and before the process according to the present invention has been applied;

### Detailed description of the presently preferred embodiments

The process of the present invention allows to obtain an optical fiber with a time-stable hydroxyl content.

The step of preparing an optical fiber is carried out by processs known to the skilled in the art and comprising the sub-steps of: obtaining a preform; drawing the optical fiber from the preform; arid bobbing the optical fiber.

The preform can be obtained by means of an outside vapor deposition process, also known as OVD process, which comprises the deposition of layers of glass particles on the outside surface of a target rod. In this way the preform grows according to a radial direction.

In another embodiment, the preform can be obtained by Modified Chemical Vapor Deposition (MCVD) differing from OVD in that the deposition occurs inside of a fusequartz tube instead of on the outside.

In a further embodiment, the preform can be obtained by Plasma Chemical Vapor Deposition (PCVD) wherein clear glass instead of soot is also deposited inside a silica tube as is done in the MCVD process, but non-isothermal plasma in the microwave frequency range (2.45GHz) is used instead of a torch or flame.

In a preferred embodiment, the process of the invention is performed for manufacturing a single-mode optical fiber, i.e. an optical fiber intended for the propagation of a single mode. Single mode optical fibers are characterized by a dispersion null at 1310 nm, minimum loss at 1510 nm and an attenuation peak at 1380 nm equal to or lower than 0.35 dB/km. Once the optical fiber has been prepared, the process according to the present invention provides the measuring of the spectral attenuation thereof.

Afterwards, the process according to the present invention comprises the exposure of the fiber to an atmosphere comprising from 1% vol. to 10% vol. of a mixture of deuterium and hydrogen, hereinafter also referred to as "passivating mixture".

Higher concentrations of said mixture may give rise to transient adsorbing structures in the working spectrum.

Advantageously said deuterium and hydrogen mixture is provided in an inert atmosphere such as a nitrogen atmosphere.

Preferably said atmosphere comprises a quantity of hydrogen of about from 0.15% vol. to 8% vol.

The subsequent steps of the process according to the present invention are to remove the optical fiber from the passivating mixture and to allow the molecules of deuterium and hydrogen to diffuse into the optical fibers. Said steps are advantageously carried out in an inactive atmosphere, i.e. an atmosphere substantially chemically inert with respect to both the optical fiber and the passivating mixture, for example room atmosphere.

In the step of allowing the above-mentioned gases to diffuse, time is given to the hydrogen and deuterium molecules for penetrating into the optical fiber glass core center to react, in the case, with the due sites and to be detected during the subsequent analising step.

The spectral attenuation of the optical fiber is measured again after the just above described steps.

Finally the attenuation is analyzed at least at 1240 nm. The signal at 1240 nm corresponds to hydrogen absorbed in a silica matrix.

Advantageously, hydrogen shows an absorption peak at 1240 nm, i.e. within the routinely checked range for the whole optical fiber batch (1200÷1600 nm) and thus the process does not require additional checking steps; and it does not originate harmful absorption features at the concentration used in the present process.

When the deuterium treatment is successful, a 1240 nm absorption peak appears in the attenuation spectrum of the fiber. In other words hydrogen is used as a marker in the passivation process since it gives a clear indication of the extent of the passivation of the SiO· defects. This is possible only if the spectral attenuation is analyzed at 1240 nm.

Advantageously the step of analysing the attenuation of the passivated fiber is performed also at 1310 nm, 1380 nm and 1550 nm. -

Said step may be advantageously performed on the whole 1200÷1600 nm spectrum.

Preferably said step is carried out from 20 hours to 72 hours from the beginning of the step of removing the optical fiber from the atmosphere comprising a mixture of deuterium and hydrogen molecules. Such a time span allows the hydrogen and deuterium molecules to diffuse into the optical fiber and prevent the degassing of the unreacted hydrogen molecules from the optical fiber.

As mentioned before, said atmosphere comprising the mixture of deuterium and hydrogen preferably comprises a quantity of hydrogen comprised between 0.15% vol. and 8% vol. This range allows to detect the 1240 nm peak without substantially affecting the absorption in the 1400 nm wavelength region.

In the present description, by the term "1400 nm wavelength region" it is intended a wavelength region including all wavelengths between 1335 and 1435 nm.

The lower limit of said range depends on the hydrogen detecting instrument. In particular it is the minimum amount of molecular hydrogen which allows to detect the hydrogen absorption structure at 1240 nm with known detecting instruments. For example, using a PK 2500 optical fiber analysis system (sold by Photon Kinetics), it is the minimum amount which allows to detect the hydrogen absorption structure at 1240 nm with a detection limit of 0.003 dB/Km. In other words, said lower limit ensures the presence of at least 0.03 ppm of molecular hydrogen in the fiber core after the diffusion has taken place.

The upper limit of the above range is the maximum amount of molecular hydrogen which allows to avoid the necessity of the optical fiber to stay in said inactivate atmosphere for long periods before being used. As a matter of fact, if the optical fiber has been exposed to an atmosphere comprising a too high concentration of hydrogen, it is necessary to subject it to a long degassing step in order to make the optical fiber usable.

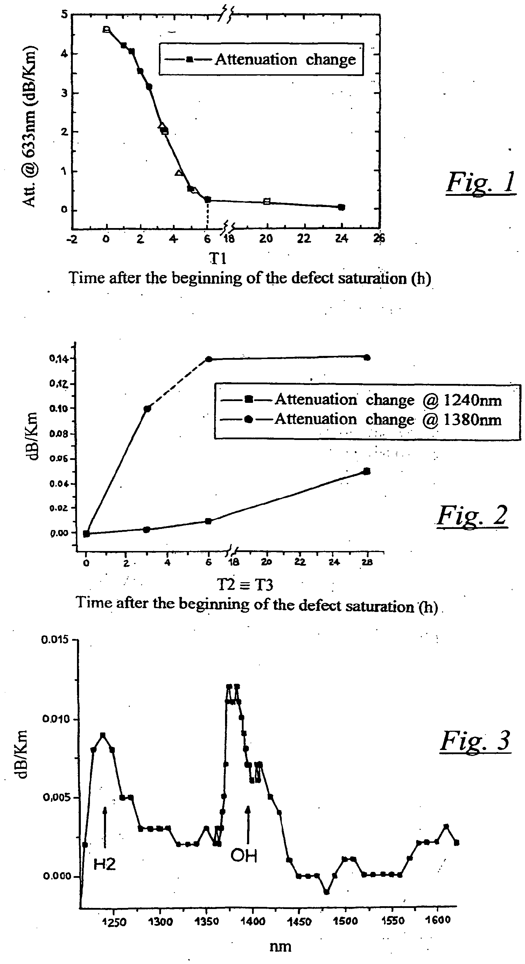

Figure 1 shows the attenuation coefficient change Δα (dB/Km) at 630 nm as a function of time T (hours) while the optical fiber is exposed to an hydrogen-containing atmosphere.

T=0 is the time when hydrogen reaches the optical fiber glass core centre and a reduction of the peak at 630 nm is detected. It can be observed that the 630 nm absorption peak, ant thus the presence of SiO· defects, decreases with time up to disappear after a certain time T1.

By "630 nm peak" we mean a peak ranging from 600 nm to 660 nm (full width half height). Typically, known instruments are able to detect a peak at 633 nm.

Figure 2 shows the attenuation change (in dB/Km) at 1380 nm (the upper diagram in the figure) and at 1240 nm (the lower diagram in the figure) as a function of time T (in hours) while the optical fiber is exposed to an hydrogen-containing atmosphere.

T=0 is the time in which hydrogen reaches the optical fiber glass core centre.

It can be observed that the 1240 nm absorption peak, and thus the presence of H₂, is about equal to zero until a time T2 in which it becomes detectable.

It can be also observed than the 1380 nm absorption peak, and thus the presence of SiOH, increases with time up to become stable after a time T3 which is substantially coincident with T2.

It has been verified that T2 is equal to T3 which is substantially equal to T1. It is therefore demonstrated that SiO· defects disappear, SiOH becomes stable and H₂ becomes detectable at the same time, as shown in the figures.

This means that the presence of molecular hydrogen excludes the presence of SiO· defects.

Since SiO· defects are the main responsible of the stability of the hydroxyl content of the optical fibres during time, and since the presence of molecular hydrogen is incompatible with the presence thereof, the presence of the 1240 nm molecular hydrogen absorption peak in the fiber absorption spectrum is sufficient to assess the complete passivation of the optical fiber.

Therefore, according to the present invention, molecular hydrogen is used as a marker and its absorption peak is used to diagnose the saturation of the SiO· defects and thus to ascertain the success of a deuterium process and to check the hydrogen stability of the optical fiber during time.

The total concentration of SiO· defects is approximately the same for all the, fibres obtained by a single core preform. This value can be estimated by the measurement of the absorption peak at 630 nm before the passivation treatment.

Accordingly, the ratio between hydrogen and deuterium concentration which must be used in the process according to the present invention, depends on the initial value of the 630 nm absorption and the 1380 nm absorption.

In particular it has been found that if the initial value of the 630 nm absorption is about -10.5 dB/Km, the 1380 nm attenuation coefficient (α) is not greater that 0.02 dB/Km and the concentration of the mixture of hydrogen and deuterium in the atmosphere is about 4% vol., the upper limit for hydrogen concentration is about 0.55% vol.

While if the initial value of the 630 nm absorption is about 13 dB/Km, the 1380 nm attenuation coefficient (α) is not greater that 0.04 dB/Km and the concentration of the mixture of hydrogen and deuterium in the atmosphere is about 1% vol., the upper limit for hydrogen concentration is about 0.17% vol.

The results of other tests conducted by the Applicant are shown in the following table 2.

According to a preferred embodiment of the present invention, the step of exposing the optical fiber to an atmosphere comprising the mixture of hydrogen and deuterium is carried out at a temperature of from 20°C to 40°C and for a time of from 5 hours to 240 hours.

Preferably said temperature is equal to 30°C and the duration of the exposing step is from 10 hours to 48 hours.

More preferably the exposing step is carried out at 28°C for a time t equal to 24 hours, with an atmosphere comprising 4% vol. of a mixture of deuterium and hydrogen. In this case, the hydrogen concentration has been found to be as follows:

**Table 2**

| **α @633 nm** | **Conc. Min.** | **Conc. 001** | **Conc. 005** |
|---|---|---|---|
| 8 dB/Km | 0.16% | 0.8% | 3.5% |
| 10 dB/Km | 0.16% | 0.4% | 1.8% |
| 12 dB/Km | 0.16% | 0.25% | 1.2% |

Wherein:
α @633nm is the 633 nm attenuation coefficient;
Conc. Min. is the hydrogen concentration which allows to detect a 1240 nm peak;
Conc.001 is the hydrogen concentration which allows to obtain an attenuation variation at 1380 nm about equal to 0.01 dB/K.m;
Conc.005 is the hydrogen concentration which allows to obtain an attenuation variation at 1380 nm about equal to 0.05 dB/Km.
The process for manufacturing an optical fiber with a time-stable hydroxyl content according to the present invention will be more clear from the following example.

### Example

A series of samples of optical fibres from different bobbins were tested.

In table 3 are reported the characteristics of the different fibres tested before applying the process according to the present invention.

**Table 3**

| **Bobbin** | **α @633 nm** | **α@1310nm** | **α@1380nm** | **α@1550nm** | **Length(km)** |
|---|---|---|---|---|---|
| 1 | 10.60 | 0.33 | 0.31 | 0.19 | 10 |
| 2 | 10.42 | 0.33 | 0.31 | 0.19 | 10 |
| 3 | 9.88 | 0.33 | 0.30 | 0.19 | 10 |
| 4 | 10.42 | 0.33 | 0.33 | 0.19 | 10 |
| 5 | 10.88 | 0.33 | 0.32 | 0.19 | 10 |

Wherein α is the attenuation coefficient (dB/Km).

In table 4 are reported the values of the parameters of the process according to the present invention as well as the results obtained for each tested bobbin.

**Table 4**

| **Bobbin** | Duration | Temperature | Deuterium concentration | Hydrogen concentration | Δα@1380nm (dB/km) |
|---|---|---|---|---|---|
| 1 | 22h | 30°C | 3.79% | 0.24% | 0.007 |
| 2 | 22h | 30°C | 3.79% | 0.24% | 0.006 |
| 3 | 22h | 30°C | 4.35% | 0.52% | 0.01 |
| 4 | 22h | 30°C | 4.31% | 0.55% | 0.013 |
| 5 | 22h | 30°C | 3.57% | 0.54% | 0.009 |

Wherein:
"Duration" is the duration of step c) of exposing the optical fiber to the atmosphere comprising the mixture of deuterium and hydrogen;
"Temperature" is the temperature used in the same step c);
"Deuterium concentration" is the volumetric percentage of deuterium in said mixture;
"Hydrogen concentration" is the volumetric percentage of hydrogen in said mixture; and
"Δα@1380nm" is the difference of the attenuation between after and before the application of the process at 1380 nm.

In figure 3 the difference of the attenuation, Δα (expressed in dB/Km), is diagrammatically represented as a function of the wavelength (expressed in nm).

From figure 3 it is possible to appreciate not only the increase in the 1380 nm attenuation but also the appearance of the 1240 nm peak due to molecular hydrogen and indicating that the deuterium treatment has been successfully carried out.

It has been verified that when the 1240 nm peak does not appear after some days of exposure to the deuterium and hydrogen atmosphere, the fiber is not compliant with the necessary requirements since the SiO· defects have not been saturated. As a matter of fact, in this case the fiber is not compliant with the known checking tests such as the IEC hydrogen test either.

## Claims

1. A process for manufacturing an optical fiber with a time-stable hydroxyl content comprising the steps of:
- preparing an optical fiber;
- measuring the spectral attenuation of the optical fiber;
- performing a passivation treatment by:
• exposing the optical fiber to an atmosphere comprising a mixture of deuterium and hydrogen molecules;
• removing the optical fiber from the atmosphere;
• allowing the deuterium and hydrogen molecules to diffuse into the optical fiber core;
- after removing the optical fiber from the atmosphere, assessing the passivation treatment in a time span that allows the hydrogen and deuterium molecules to diffuse into the optical fiber core and prevents degassing of unreacted hydrogen, molecules from the optical fibre core, by:
• measuring the spectral attenuation of the optical fiber;
• monitoring appearance of an absorption peak at 1240 nm;
• using the appearance of the absorption peak at 1240 nm as marker to ascertain the success of the passivation treatment.

2. A process according to claim 1 wherein said atmosphere comprises from 1% vol. to 10% vol. of the mixture of deuterium and hydrogen molecules.

3. A process according to claim 1 wherein the optical fiber manufactured by the process has an attenuation peak at 1380 nm equal to or lower than 0.35 dB/km.

4. A process according to claim 1 wherein said mixture of deuterium and hydrogen is provided in an inert atmosphere.

5. A process according to claim 1 wherein said atmosphere comprises a quantity of hydrogen of from 0.15% vol. to 8% vol.

6. A process according to claim 1 wherein step of exposing the optical fiber to said atmosphere is carried out at a temperature of from 20°C to 40°C.

7. A process according to claim 1 wherein step of exposing the optical fiber to said atmosphere is carried out for a time t of 10 hours to 48 hours.

8. A process according to claim 1 wherein step of preparing the optical fiber comprises the sub-steps of drawing an optical fiber from a preform and bobbing the optical fiber.

9. A process according to claim 8 wherein said preform is obtained by a process selected from vapor-phase axial deposition (VAD) process, outside vapor deposition (OVD) process, modified chemical vapor deposition (MCVD) process, plasma chemical vapor deposition (PCVD) process.

10. A process according to claim 1 wherein step of analysing the attenuation of the fiber is performed also at 1310 nm and/or at 1380 nm and/or at 1550 nm.

11. A process according to claim 1 wherein step of measuring the spectral attenuation of the fiber is carried out from 20 to 72 hours from the beginning of the step of removing the optical fiber from the atmosphere.

12. A process according to claim 1 wherein the step of measuring the spectral attenuation of the fiber before exposure to the atmosphere comprising a mixture of deuterium and hydrogen molecules comprises the step of evaluating the intensity of the absorption peak at 630 nm.

13. A process according to claim 12 wherein the measuring step comprises the step of evaluating the intensity of absorption peaks selected from that at 1380 nm, that at 1240 nm or both.

14. A process according to claim 1 wherein step of measuring the spectral attenuation of the fiber is carried out within 72 hours from the end of the exposing step.

## Patentansprüche

1. Verfahren zum Herstellen einer Lichtleitfaser mit zeitstabilem Hydroxylgehalt, umfassend folgende Schritte:
- Bereitstellen einer Lichtleitfaser;
- Messen der Spektraldämpfung der Lichtleitfaser;
- Ausführen einer Passivierungsbehandlung durch:
Aussetzen der Lichtleitfaser einer Atmosphäre, die ein Gemisch aus Deuterium- und Wasserstoffmolekülen enthält;
Entnehmen der Lichtleitfaser aus der Atmosphäre; und
Zulassen, dass die Deuterium- und Wasserstoffmolekole in den Lichtleitfaserkern diffundieren;
- nach dem Entnehmen der Lichtleitfaser aus der Atmosphäre, Bewerten der Passivierungsbehandlung in einer Zeitspanne, die es den Wasserstoff- und Deuteriummolekolen gestattet, in den Lichtleitfaserkern zu diffundieren, und ein Ausgasen der nicht reagierten Wasserstoffmoleküle aus dem Lichtleitfaserkern verhindert, durch:
Messen der Spektraldämpfung der Lichtleitfaser;
Überwachen des Auftretens einer Absorptionsspitze bei 1.240 nm; und
Verwenden des Auftretens der Absorptionsspitze bei 1.240 nm als eine Markierung, um den Erfolg der Passivierungsbehandlung zu bestätigen.

2. Verfahren nach Anspruch 1, bei dem die Atmosphäre zwischen 1% vol. und 10% vol. des Gemisches aus Deuterium- und Wasserstoffmolekülen enthält.

3. Verfahren nach Anspruch 1, bei dem die Lichtleitfaser, die durch das Verfahren hergestellt wird, eine Dämpfungsspitze bei 1.380 nm kleiner gleich 0,35 dB/km hat.

4. Verfahren nach Anspruch 1, bei dem das Gemisch aus Deuterium und Wasserstoff in einer inerten Atmosphäre bereitgestellt wird.

5. Verfahren nach Anspruch 1, bei dem die Atmosphäre eine Menge Wasserstoff von 0,15% vol. bis 8% vol. enthält.

6. Verfahren nach Anspruch 1, bei dem der Schritt des Aussetzens der Lichtleitfaser der Atmosphäre bei einer Temperatur von 20°C bis 40°C ausgeführt wird.

7. Verfahren nach Anspruch 1, bei dem der Schritt des Aussetzens der Lichtleitfaser der Atmosphäre für eine Zeitdauer t von 10 bis 48 Stunden ausgeführt wird.

8. Verfahren nach Anspruch 1, bei dem der Schritt des Bereitstellens der Lichtleitfaser die Teilschritte des Ziehens einer Lichtleitfaser aus einer Vorform und das Wickeln der Lichtleitfaser zu einer Spule umfasst.

9. Verfahren nach Anspruch 8, bei dem man die Vorform durch ein Verfahren erhält, das aus dem Dampfphasen-Axialabscheidungs- (VAD-) Verfahren, dem Außenoberflächen-Dampfabscheidungs- (OVD-) Verfahren, dem modifizierten chemischen Dampfabscheidungs- (MCVD-) Verfahren und dem chemischen Plasmadampfabscheidungs- (PCVD-) Verfahren gewählt ist.

10. Verfahren nach Anspruch 1, bei dem der Schritt des Analysierens der Dämpfung der Faser auch bei 1.310 nm und/oder 1.380 nm und/oder 1.550 nm ausgeführt wird.

11. Verfahren nach Anspruch 1, bei dem der Schritt des Messens der Spektraldämpfung der Faser für 20 bis 72 Stunden ab dem Beginn des Schrittes des Entnehmens der Lichtleitfaser aus der Atmosphäre ausgeführt wird.

12. Verfahren nach Anspruch 1, bei dem der Schritt des Messens der Spektraldämpfung der Faser vor dem Aussetzen derselben der Atmosphäre, die ein Gemisch aus Deuterium- und Wasserstoffmolekülen enthält, den Schritt des Bewertens der Intensität der Absorptionsspitze bei 630 nm umfasst.

13. Verfahren nach Anspruch 12, bei dem der Messschritt den Schritt des Bewertens der Intensität von Absorptionsspitzen umfasst, die aus jener bei 1.380 nm und jener bei 1.240 oder beiden gewählt wird.

14. Verfahren nach Anspruch 1, bei dem der Schritt des Messens der Spektraldämpfung der Faser innerhalb 72 Stunden ab dem Ende des Schrittes des Aussetzens ausgeführt wird.

## Revendications

1. Procédé de fabrication d'une fibre optique avec une teneur en hydroxyle temporellement stable, comprenant les étapes consistant à ;
- préparer une fibre optique ;
- mesurer l'atténuation spectrale de la fibre optique ;
- réaliser un traitement de passivation en :
-- exposant la fibre optique à une atmosphère comprenant un mélange de molécules de deutérium et d'hydrogène ;
-- retirant la fibre optique de l'atmosphère ;
-- permettant aux molécules de deutérium et d'hydrogène de se diffuser dans le coeur de la fibre optique ;
- après avoir retiré la fibre optique de l'atmosphère, évaluer le traitement de passivation dans une durée qui permet aux molécules de deutérium et d'hydrogène de se diffuser dans le coeur de la fibre optique et empêche le dégazage de molécules d'hydrogène n'ayant pas subi de réaction à partir du coeur de la fibre optique, en ;
-- mesurant l'atténuation spectrale de la fibre optique ;
-- surveillant une apparence d'un pic d'absorption à 1240 nm ;
-- utilisant l'apparence du pic d'absorption à 1240 nm en tant que marqueur pour déterminer la réussite du traitement de passivation.

2. Procédé selon la revendication 1, dans lequel ladite atmosphère comprend de 1 % en volume à 10 % en volume du mélange de molécules de deutérium et d'hydrogène.

3. Procédé selon la revendication 1, dans lequel la fibre optique fabriquée par le procédé possède un pic d'atténuation à 1380 nm égal ou inférieur à 0,35 dB/km.

4. Procédé selon la revendication 1, dans lequel ledit mélange de deutérium et d'hydrogène est fourni dans une atmosphère inerte.

5. Procédé selon la revendication 1, dans lequel ladite atmosphère comprend une quantité d'hydrogène de 0,15 % en volume à 8 % en volume.

6. Procédé selon la revendication 1, dans lequel l'étape consistant à exposer la fibre optique à ladite atmosphère est réalisée à une température de 20°C à 40°C.

7. Procédé selon la revendication 1, dans lequel l'étape consistant à exposer la fibre optique à ladite atmosphère est réalisée pendant un temps t de 10 heures à 48 heures.

8. Procédé selon la revendication 1, dans lequel l'étape consistant à préparer la fibre optique comprend les sous-étapes consistant à étirer une fibre optique à partir d'une préforme et à bobiner la fibre optique.

9. Procédé selon la revendication 8, dans lequel ladite préforme est obtenue par un procédé choisi parmi un procédé de dépôt axial en phase vapeur, un procédé de dépôt externe en phase vapeur, un procédé modifié de dépôt chimique en phase vapeur, un procédé de dépôt chimique en phase vapeur au plasma.

10. Procédé selon la revendication 1, dans lequel l'étape consistant à analyser l'atténuation de la fibre est réalisée également à 1310 nm et/ou à 1380 nm et/ou à 1550 nm.

11. Procédé selon la revendication 1, dans lequel l'étape consistant à mesurer l'atténuation spectrale de la fibre est réalisée de 20 à 72 heures à partir du début de l'étape consistant à retirer la fibre optique de l'atmosphère.

12. Procédé selon la revendication 1, dans lequel l'étape consistant à mesurer l'atténuation spectrale de la fibre avant l'exposition à l'atmosphère comprenant un mélange de molécules de deutérium et d'hydrogène comprend l'étape consistant à évaluer l'intensité du pic d'absorption à 630 nm.

13. Procédé selon la revendication 12, dans lequel l'étape consistant à mesurer comprend l'étape consistant à évaluer l'intensité de pics d'absorption choisis parmi celui à 1380 nm, celui à 1240 nm ou les deux.

14. Procédé selon la revendication 1, dans lequel l'étape consistant à mesurer l'atténuation spectrale de la fibre est réalisée dans les 72 heures à partir de la fin de l'étape consistant à exposer.
